# EUROPEAN PATENT APPLICATION

(11) **EP 0 587 304 A1**
(43) Date of publication of application: **16.03.1994**
(21) Application number: 93306232.5
(22) Date of filing: 06.08.1993
(51) Int. Cl.: B29C 47/92

(54) **An extrusion apparatus and method**

(30) Priority: 06.08.1992 GB 9216724
(71) Applicant: ROTALAC PLASTICS LIMITED, Altrincham, Cheshire WA14 1TB (GB)
(72) Inventor: Chan, Kin Kong, Aldershot Hampshire GU12 4JW (GB)
(74) Representative: Linn, Samuel Jonathan

(57) **Abstract**

An automatic extrusion apparatus includes a plastics extruder (12), cooling means and cutting means (38). Control means for the apparatus are provided which include a temperature sensor (24) associated with the extruder (12), a second image processor (26,64) operative to assess surface quality of an extruded product (22), a speed sensor (36) upstream of the cutting means (38) for measuring extrusion rate and a first image processor (46,64) operative to measure end dimensions of an extruded product (22). The control means are operative to vary process temperatures and/or extrusion rate in response to a variance in one or more measurements from a sensor and/or image processor compared to predetermined values stored in the control means.

## Description

This invention relates to an extrusion apparatus and method, and especially to an automatic plastic extrusion assembly in which the quality of the product is monitored to ensure improved efficiency and production quality.

In known plastic extrusion processes a raw material is melted at a high temperature and under pressure in an extruder. The molten plastic is then forced out of the extruder through a die to form a continuous product of uniform cross-section. The die is also maintained at an elevated temperature to ensure that the molten plastic does not solidify on contact therewith. The temperature of the die and of the extruder determine the surface quality of the finished product and the properties of the extruded article whilst the extrusion rate will determine the overall output of the production line.

The extruded article is then cooled for further processing which may include re-sizing, drilling, cutting, etc., depending on the shape and requirements of the finished product. In order to obtain the required features of each product, these further processes have to be synchronised and closely monitored.

Finally, the extruded continuous product is cut into individual lengths of a predetermined size and packed at the end of the production line. It will be understood that the dimensions, surface texture and other properties, for example hardness and flexibility, are determined not only by the production parameters of the extruder, as mentioned previously, but also the running condition of the other process steps, for example the cooling stage. The control of these is therefore interrelated.

In known systems, the monitoring and control of process variables is accomplished using a "hard wired" monitoring panel. Such a panel contains electrical components, for example timers, relays and counters, etc., which are wired together following a specific circuit diagram. The panel will display visually the variables and changes to them and an operator will be responsible for implementing any required changes to the process. It will be understood that a problem with such a panel is that once connected, any changes to the control procedure will involve rewiring of the whole or at least part of the panel. Such an arrangement is therefore relatively inflexible.

One further problem with a "hard-wired" control panel is the limited number of variables which can be easily monitored and the degree of control thereover. Furthermore, the degree of accuracy with which control procedures, implemented by such panels, is not great and malformed articles are relatively common.

It is known to monitor the surface of an extrusion using a video camera, and such a system is shown in European Patent Application No. 89311766.3. The control of the extrusion process can then be adjusted in accordance with data collected relating to the surface of the extruded product.

It is also known to obtain approximate information relating to the shape or cross-sectional dimensions of the extruded produce by using a second video camera placed so that its axis of view is perpendicular to the longitudinal axis of the extruded product. Again the process can be adjusted according to data obtained in this way. However this system has the problem that accurate data relating to complex shapes cannot be obtained.

It is an object of the present invention to provide an extrusion assembly in which production variables may be controlled more accurately to ensure improved efficiency and production quality, whilst reducing down time and scrap level of malformed or unwanted articles.

Accordingly, a broad aspect of the invention provides an automatic extrusion assembly including a control system having means to monitor a plurality of process variables and operative to adjust process temperatures and extrusion rate automatically in response to changes in at least one of the monitored variables.

In a first aspect, the present invention provides an extrusion apparatus including a plastics extruder for extrusion of a product, and control means for controlling at least one operating parameter of the extruder, characterised in that the apparatus includes first image data sampling means for collection of end dimension data of an extruded product and transmission of the data to the control means, wherein the at least one operating parameter of the extruder is controllable by the control means in accordance with the data.

In this way the extruded product can be more accurately monitored and the control process adjusted to produce a better extrusion, thus improving quality and reducing the amount of scrap produced.

Preferably, the rate at which the extruded product is removed or hauled away from the extruder is also controlled in accordance with the data.

Preferably, the automatic extrusion assembly comprises a plastics extruder, cooling means and cutting means. The control may include at least a temperature sensor associated with the extruder, an image processor operative to assess surface quality of an extruded product, and a speed sensor located upstream of the cutting means for measuring extrusion rate. The control means may be operative to vary process temperatures and/or extrusion rate in response to a variance in one or more measurements from a sensor and/or image processor compared to predetermined values stored in the control means.

In the preferred embodiment, the control means is arranged such that there is continuous modifying of each process variable covered by the sensors with readings monitored by a central control unit such as a computer or programmable logic controller which is operative to compare any variation in quality or dimension and preferably implement a variation to either the extruder temperature, the die temperature or the extrusion rate in order to restore quality to its original predetermined level.

Preferably the control means stores data relating to desired characteristics of the extruded product and this data is compared to data received from one or more of the sensors and/or image data sampling means.

Preferably the first image data sampling means includes a first camera arranged so that it is substantially aligned with the axis or bore of the extruded product and dimensions of the product's end surface can be monitored. The picture produced is digitally processed and supplied to a respective central control unit. This central control unit then supplies data on variations in quality and dimension of the extruded product to a programmable logic controller for implementation of production parameter variations.

Advantageously, the second image processor is arranged to determine surface quality of the product essentially immediately after extrusion by digitally analysing an image formed by a second camera and comparing same to predetermined values stored in a central control unit. Preferably the second camera is arranged at approximately 90° to the first camera and the central control unit may be the same unit as used for the first image processor.

One advantage of the increased product quality available utilising the invention is in the automation of the packaging of an extruded product. Heretofore the extruded product has simply been allowed to fall from the end of the extrusion process into a container where articles were gathered by hand for subsequent packaging, i.e. boxing.

In order to automate this process as well, the invention preferably also includes automatic packaging apparatus comprising means for receiving extruded articles from the production line and presenting same to the first image processor, hopper means for receiving articles after presentation to the second image processor provided with a controllable outlet for permitting a predetermined number of extruded articles to pass from the hopper into a container for packaging. The system preferably further including sensor means connected to the programmable logic controller for counting the number of extruded articles permitted to pass into a specific container.

In the preferred embodiment, the extruded article is a tubular form and is preferably crimped prior to packaging. The packaging means therefore comprises a crimping mechanism operative to crimp one or both ends of the extruded tube prior to packaging, the crimping means including a temperature sensor providing readings to the programmable logic controller.

Preferably, the temperature sensors adjacent to the extruder and the cooling tank are of the infra-red type in order to monitor the heating process at a distance where direct contact with the article whose temperature is to be measured is not possible. Other temperature sensors, for example in the plastic extruder, the extrusion die and the crimper are preferably thermocouples.

In a second aspect, the present invention provides a method of operating an extrusion apparatus, the apparatus including a plastics extruder for extrusion of a product and control means for controlling at least one operating parameter of the extruder, including the steps of measuring taking end dimension data of an extruded product and transmitting that data to the control means, and controlling the at least one operating parameter of the extruder in accordance with the data.

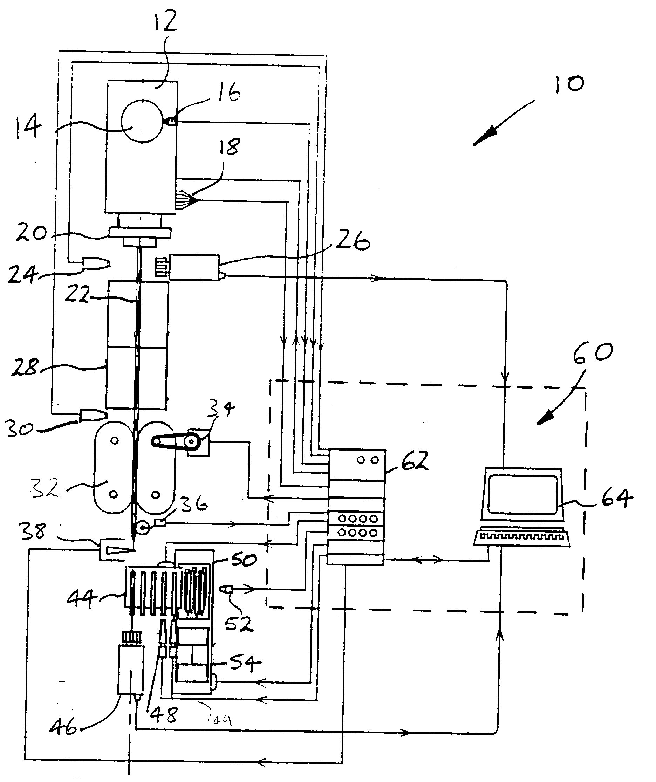

The invention will be described further by way of example with reference to the accompanying drawings in which the single figure is a simplified block diagram of a preferred embodiment of the invention.

Referring to the single figure, a first embodiment of the invention is referred to generally by the reference 10 and comprises a plastics extruder 12 having a hopper 14 for storing raw material. A level sensor 16 is provided to monitor the level of raw material in the hopper 14 during use of the apparatus.

The hopper 14 feeds raw material to the plastic extruder 12 where it is melted at an elevated temperature and under pressure. The temperature is monitored by thermocouples 18 and the pressurised molten plastic is then forced through a die 20 as an extruded product 22. The temperature of the product 22 immediately after leaving the die 20 is monitored by an infra-red temperature sensor 24 and the surface quality is monitored by a second camera 26 attached to second image processing apparatus 64.

The product 22 is cooled and solidified in a water tank 28 before proceeding to a conveying section 32. The efficiency of the cooling tank is determined by a second infra-red temperature sensor 30 monitoring the surface temperature of the product 22 immediately after leaving the said tank.

The conveying section 32 is arranged to frictionally engage the product, using belts or wheels etc., so as to pull the product from the extruder and push it past cutting means. The section 32 is powered by a motor 34 and a gear or chain drive mechanism. An encoder and sensor arrangement 36 is placed immediately before the cutting means to determine the speed of the product 22 passing thereby.

Cutting means 38 is located substantially immediately after the speed sensor 36 and synchronised therewith such that operation thereof will sever predetermined lengths of the extruded product 22 as desired. In the preferred embodiment, the chopping means 38 is formed as a disc having an axis of rotation parallel to the extruded products axis, the disc being provided with a blade projecting radially therefrom. The disc is arranged to rotate on receipt of a command from the sensor 36 so as to cut through the extruded product 22 when a predetermined length has passed the sensor 36.

The sections of the extruded product 22 are collected in a magazine arrangement 44 where they are held or mounted individually and presented to a first camera 46 for measurement of the end dimensions of the extruded products. Once the sections of extruded product have passed this check they are presented to a crimping mechanism 48 comprising heated metal end pieces which are inserted into open ends of the extruded product to soften those ends and a jaw mechanism (not shown) operative to grip the ends of the tubes and compress them when they have been softened. The crimping mechanism 48 is provided with a thermocouples 49 for measuring the temperature thereof during use.

Once the extruded sections have been crimped, they are collected in a hopper 50 located at above a boxing section having a plurality of boxes 54. A sensor 52 is placed below the hopper to count the number of tubes transferred from the hopper into a box and controlling valve means (not shown) operative to close the outlet from the hopper 52 to the box 54.

In this way, the production of filled boxes 54 of extruded product 22 is completely automated.

The level sensor 16, thermocouples 18,49, infra-red sensors 24,30, the first and second cameras 46,26, (which may be CCD cameras) the speed sensor 36 and the product container 52 are all attached to a programmable logic controller 62 comprising, together with an image processor 64, control means 60. Production parameters are input into the programmable logic controller 62 which can be arranged so as to display the process parameters and other production data visually or graphically.

The parameters are preferably provided as preset ranges and new parameters will only be accepted where they are within their preset range. The production process is then adjusted according to input parameters, i.e. the temperature of the plastic extruder is altered depending on the input plastic material etc.

Furthermore, this monitoring of the production quality of the extruder is maintained by monitoring the appearance or texture of the product as it leaves the die 20 and is viewed by the second image processing camera 26. The camera divides the scanned area into pixels and records the light intensity of the scanned area pixel by pixel (as does the first camera). The digitised information is then sent to the image processor 64 for analysis. As the product is moving, the image is frozen by use of a high speed camera shutter and an intense light.

It will thus be appreciated that the invention provides continuous on-line monitoring of the various production variables involved in the extrusion process. Furthermore the system is inherently flexible in permitting variation of those variables by the process operator where differing end products are required. Furthermore, by forming a closed feed-back loop, the ability of the process to maintain production quality by avoidance of fluctuations in process parameters is considerably improved.

The invention is not confined to the foregoing details and variations may be made thereto with the scope of the invention. For example, the temperature sensors need not be thermocouples or infra-red thermometers as described and any convenient device could be used. The image processing apparatus described is the most convenient for the end product envisaged, however, other systems, for example laser surface measurement instruments, could be substituted therefore. Furthermore, ultrasonic means of cutting and crimping can be substituted for the mechanical arrangement described. Such ultrasonic procedures and the devices for carrying out such are well known in the prior art. Other variations may also be possible.

## Claims

1. An extrusion apparatus including a plastics extruder (12) for extrusion of a product, and control means (62) for controlling at least one operating parameter of the extruder, characterised in that the apparatus includes first image data sampling means (46,64) for collection of end dimension data of an extruded product (22) and transmission of the data to the control means, wherein the at least one operating parameter of the extruder is controllable by the control means in accordance with the data.

2. An apparatus according to Claim 1 wherein the first image data sampling means (46,64) includes a camera (64) aligned substantially with the longitudinal axis of the extruded product (22).

3. An extrusion apparatus according to Claim 1 or Claim 2 further including a temperature sensor (24) associated with the extruder (12), and/or second image data sampling means (26,64) for collection of surface quality data of an extruded product (22), and/or a speed sensor (36) for measuring extrusion rate, wherein the control means are operable to vary process temperature and/or extrusion rate of the extruder according to data received from a sensor and/or image data sampling means.

4. An apparatus according to Claim 3 wherein the first image data sampling means (26,64) is operable to assess surface quality of an extruded product (22) by analysing an image obtained using a camera (26) and comparing the image to predetermined values stored in the control means.

5. An apparatus according to Claim 3 or 4 wherein the camera (26) is arranged at or near to the extruder (12) for assessing surface quality of the extruded product (22).

6. An apparatus according to any one of Claims 1 to 5 which includes hopper means (50) for receiving extruded product downstream of the second image data sampling means (46,64) and which has a controllable outlet for permitting a predetermined number of products to pass from the hopper.

7. An apparatus according to Claim 6 including sensor means (52) associated with the control means for counting number of products passing from the hopper means (50).

8. An apparatus according to any preceding Claim wherein the temperature sensor (24) associated with the extruder is of infrared type.

9. An apparatus according to any preceding Claim wherein the cutting means (38) are synchronised with the speed sensor (36).

10. A method of operating an extrusion apparatus, the apparatus including a plastics extruder (12) for extrusion of a product and control means (62) for controlling at least one operating parameter of the extruder, including the steps of collecting end dimension data of an extruded product and transmitting that data to the control means, and controlling the at least one operating parameter of the extruder in accordance with the data.
